# EUROPEAN PATENT APPLICATION

(11) **EP 4 206 658 A1**
(43) Date of publication of application: **05.07.2023**
(21) Application number: 21217938.6
(22) Date of filing: 28.12.2021
(51) Int. Cl.: G01N 21/65, G01J 3/44, G01N 21/25, G01N 21/31, G01N 21/47

(54) **HANDHELD RAMAN SPECTROSCOPY DEVICE AND METHOD FOR OPERATING A HANDHELD RAMAN SPECTROSCOPY DEVICE**

(71) Applicant: Serstech AB, 227 64 Lund (SE)
(72) Inventor: Lövskog, Thomas, 244 41 Kävlinge (SE)
(74) Representative: AWA Sweden AB

(57) **Abstract**

A handheld Raman spectroscopy device (10) and a method of operating a handheld Raman spectroscopy device (10) comprising:
a light source (11),
a spectrometer (15), wherein the light source (11) and the spectrometer (15) are arranged in a housing (30), the housing (30) being provided with an aperture (70) allowing light from the light source (11) to exit the housing (30) through the aperture (70) in a first direction (L) for illuminating a sample (S) and allowing scattered light from the sample (S) to enter the housing (30) through the aperture (70) in a second direction (L'), the second direction (L') being opposite the first direction (L), wherein the spectrometer (15) is configured to analyse a Raman contribution of the scattered light, the device further comprising:
a removeable cap (29) configured to selectively cover respectively expose the aperture (70), and
a cap removal sensor (50) configured to detect whether the cap (29) covers or exposes the aperture (70).

## Description

### Field of the invention

The present invention relates to a handheld Raman spectroscopy device and to a method for operating a handheld Raman spectroscopy device.

### Background art

To detect and to determine different substances is highly desired in a large variety of applications ranging from chemical analysis to in-field determination of potentially hazardous and toxic substances. In many situations correct determination of a substance is of utmost importance.

For instance, to be able to determine if a substance is hazardous, e.g. explosive, or not, is critical since a wrongful determination may result in severe consequences, potentially with personnel injuries and material losses. Similarly, it may also be critical to determine if a substance is toxic, or not, since a wrongful determination may result in serious consequences involving personnel and environmental risks. Further, it is highly important to verify that a drug is correctly synthesized, since a wrongfully synthesized drug may become harmful instead of curative for a subject.

When detecting and determining different substances different approaches may be used.

A common way used to investigate properties of a substance is to let the substance undergo a chemical analysis. A chemical analysis of a substance is often accurate, but is typically suffering from complexity and the time required for the analysis. Moreover, chemical analysis often require that various further substances or analytes are used or involved in the analysis. Such analysis therefore tends to become costly and time consuming. Another drawback resides in that such analysis are generally too complicated and time consuming to be conducted under field conditions.

Another commonly used approach for detecting and determining different substances is to use some form of spectroscopic analysis. A common type of spectroscopy used in this case is optical spectroscopy where light having interacted with the substance in question is analysed using a spectrometer. The light interacting with the substance is scattered by the substance resulting in that the scattered light is affected by the substance. Such scattering from a substance can either be elastic or inelastic. In elastic scattering the photons of scattered light exhibit the same energy as the photons impinging on the substance at hand. In inelastic scattering the photons of scattered light exhibit a different energy as compared to the photons impinging on the substance at hand. In-elastically scattered photons therefore either gain or lose energy.

Both elastically and in-elastically scattered photons may be used in spectroscopic analyses of substances. When looking at elastically scattered photons certain properties, such as colour, of the substance may be determined. However, when it comes to determining a certain substance, more sophisticated spectroscopic techniques also relying on in-elastically scattered photons are generally required.

Raman spectroscopy is a spectroscopic technique relying on inelastic scattering of photons, known as Raman scattering. In Raman spectroscopy a source of monochromatic light, usually from a laser, is used. The light source may emit light in the visible, near infrared, or near ultraviolet range, although X-rays can also be used. The laser light interacts with molecular vibrations, phonons or other excitations in the molecular system, resulting in that the energy of the laser photons being shifted up or down in the inelastically scattered light thereof. The shift in energy gives information about the vibrational modes in the molecular system at hand. In other words, inelastically light scattered from the molecules of the substance at hand gives rise to a vibrational spectrum that includes of a series of lines or peaks constituting a molecular "fingerprint" for the substance. Hence a substance or material will give rise to a unique Raman spectrum, i.e. its "fingerprint". The unique Raman spectrum makes Raman spectroscopy suitable for identifying or determining substances or materials. In many fields of technology Raman spectroscopy is a well-established spectroscopic technique for rapid identifications of substances and chemicals with high degree of accuracy.

A typical Raman spectrum of a substance shows the shift of Raman wavelengths relative to elastically scattered light, typically referred to as Rayleigh-scattered light. The Rayleigh-scattered light has the same wavelength as the incident light of the light source, whereas the Raman wavelengths are shifted up or down relative to the Rayleigh-scattered light. The vertical axis of a Raman spectrum typically represents the intensity of the Raman wavelengths and yields the concentration of the chemical components of the sample or substance, whereas the horizontal axis of a Raman spectrum typically represents the wavelength shift in relation to the Rayleigh light.

The light from Raman scattering is typically associated with weak intensities and may be difficult to observe without intense monochromatic excitation and a sensitive detector. Typically, 1 out of 10⁶ - 10⁹ photons scattered by a sample is a photon relating to a Raman wavelength.

Technical development of lasers, detectors, and optical components as well as continued miniaturization of electronic components have made it possible to produce fast and reliable portable Raman instruments which are suitable to use under field conditions.

However, since Raman spectroscopy involves intense monochromatic excitation, use of the portable Raman instruments in the field may introduce safety concerns. A device capable of producing a high intensity monochromatic excitation suitable to for Raman spectroscopy may unfortunately also be harmful to human eyes and other sensitive items present in the vicinity of the sample to be tested. Moreover, there is typically also always a desire to make portable Raman instruments convenient to use.

### Summary of the invention

In view of that stated above, the object of the present invention is to provide a handheld Raman spectroscopy device which reduces the risk of injury to a user or bystander when operating the device.

Further, an object of the present invention is to facilitate use of a handheld Raman spectroscopy device.

An additional object of the present invention is to improve the quality and reliability of the measurements taken with said handheld Raman spectroscopy device.

To achieve at least one of the above objects and also other objects that will be evident from the following description, a handheld Raman spectroscopy device having the features defined in claim 1 is provided according to the present invention. Preferred embodiments of the device will be evident from the dependent claims.

More specifically, there is provided according to the present invention a handheld Raman spectroscopy device comprising a light source, a spectrometer, wherein the light source and the spectrometer are arranged in a housing. The housing is provided with an aperture allowing light from the light source to exit the housing through the aperture in a first direction for illuminating a sample and allowing scattered light from the sample to enter the housing through the aperture in a second direction, the second direction being opposite the first direction. The spectrometer is configured to analyse a Raman contribution of the scattered light. The handheld Raman spectroscopy device further comprises a removeable cap configured to selectively cover respectively expose the aperture, a cap removal sensor configured to detect whether the cap covers or exposes the aperture and a distance sensor facing along the first direction, the distance sensor being configured to measure a distance to the sample in order to determine a distance between the aperture and the sample. The handheld Raman spectroscopy device is configured to initiate operation of the light source in response to: the cap removal sensor detecting that the aperture is exposed and the distance sensor detecting that the distance between the aperture and the sample is below a first measurement distance value, and to initiate the spectrometer to record a spectrum of light received through the aperture, the light including a Raman contribution of light scattered by the sample. The provision of a cap provides a protection of the lens or window forming the aperture. The handheld Raman spectroscopy device is further made more convenient and safer to use. The cap removal sensor detector facilitates initiation of the light source upon removal of the cap and thus exposure of the aperture. Further, the distance sensor prevents that the light source is activated when no sample or surface is present in the proximity of the device, i.e. closer than the first measurement distance. It may in this context be noted that aperture refers to an optical aperture, i.e. an area allowing light to pass through. Aperture is not intended to refer to a physical opening being void of any matter. Typically, the aperture is physically covered by a lens or a window. The distance sensor may be of a kind commonly referred to as a proximity sensor typically producing a response whether or not the sample is within a sensing distance, or may be of a kind actually determining a distance. A so-called proximity sensor may be used in case the different distances referred to are set as one and the same, namely a sensing distance of the proximity sensor. However, the distance sensor is preferably of a kind capable of actually determining different distances between the distance sensor and the sample. Such a distance sensor may e.g. transmit and receive a signal, such as a sound wave and/or an electromagnetic wave. The distance sensor may then determine the distance to the sample based on the received signal, such as e.g. the time it takes for the signal to travel to and return from the sample, and/or the angle of the reflected signal. The distance sensor may e.g. be an ultrasound sensor, a radar, a lidar, a time-of-flight sensor, or an IR sensor. In a preferred embodiment, the distance sensor is a so-called time-of-flight sensor. The time-of-flight sensor preferably transmits IR-light and determines the distance based on the time it takes for the IR-light to travel to and return from the sample. The IR-light has preferably a wavelength of about 940nm.

Moreover, the automatic initiation of the light source and the automatic initiation of the spectrometer to record a spectrum of light, further facilitates use of the handheld Raman spectroscopy device.

The cap removal sensor is preferably associated with, preferably physically connected to or housed in, the housing of the handheld Raman spectroscopy device.

The cap removal sensor may be associated with the housing of the handheld Raman spectroscopy device. The cap removal sensor may further be arranged such that it is covered by the cap when the cap is mounted to the device. The cap removal sensor is preferably associated with, preferably physically connected to or housed in, the housing of the handheld Raman spectroscopy device.

The distance sensor may be configured to automatically shut off when the cap is placed over the aperture, avoiding undesired operation of the distance sensor. This further facilitates use of the handheld Raman spectroscopy device. It also provides a robust manner of saving battery power.

The cap removal sensor may be configured to detect the removal of the cap based on at least one selected from the group consisting of: inductive sensing, capacitive sensing and/or magnetic sensing. One advantage with these kinds of sensing is that do not require a direct contact and that they thereby may be designed such that the sensors are hidden beneath or in flush with the surface of the housing. Thereby, such sensors working with inductive sensing, capacitive sensing and/or magnetic sensing are not prone to catch dirt and debris which otherwise might disturb the sensors. However, it may be noted that also other kinds of sensing are conceivable. The cap removal sensor may e.g. be a mechanically operated sensor, such as a button or lever interacting with the cap. Alternatively, the sensing may be in the form of the cap or a part of the cap forming part of an electric circuit being broken by the removal of the cap.

The distance sensor may be configured to automatically initiate in response to the cap being removed, thus facilitating use of the handheld Raman spectroscopy device. This further facilitates use of the handheld Raman spectroscopy device. It also provides a robust manner of saving battery power.

The handheld Raman spectroscopy device may in response to the cap removal sensor detecting that the aperture is exposed and to that the spectrometer records a spectrum of light received through the aperture be configured to initiate matching of the Raman contribution of light scattered by the sample against known Raman contributions in a database.

The handheld Raman spectroscopy device may be configured to allow operation of the light source when the distance between the aperture and the sample is below the first measurement distance value and to prevent operation of the light source when the distance between aperture and the sample is above a second measurement distance value, the second measurement distance value being equal to or larger than the first measurement distance value. The safety of the handheld Raman spectroscopy device is thus improved, as the light source is only active if the distance is below the second measurement distance. The risk that the high intensity light from the light source is accidentally directed towards sensitive items, such as the user's or bystander's eyes can thus be reduced.

The second measurement distance value may be equal to or larger than the first measurement distance value. By having the same value for the second measurement distance value and the first measurement distance value there is provided a straight-forward and robust design and it is intuitive for the user. Having the second measurement distance value being larger than the first measurement distance value, may e.g. be secure that the handheld Raman spectroscopy device is close to the intended measurement position before the operation is allowed whereby it may desirous to have a comparable short first measurement distance value between the sample and the aperture at which first measurement distance value the operation is allowed, whereas it may be desirous that the user is allowed to move the handheld Raman spectroscopy device at bit further away before the second measurement distance value is reached and the operation is prevented. It may be noted that this difference may especially, but not exclusively, be useful in case a determination of the distance being shorter than the first measurement distance value is used to automatically initiate recording of a Raman spectrum by the handheld Raman spectroscopy device.

The light source may be switched off directly in response to the distance between the aperture and the sample being above the second measurement distance value. This may be used to provide a strict response with a strict security consideration at hand. This configuration with direct switch off may especially, but not exclusively, be useful in case the second measurement distance value is predetermined as a relatively large distance which at least theoretically could lead to a situation where the light beam is directed beside the sample.

The light source may be switched off after a first predetermined switch-off-time period in response to the distance between the aperture and the sample being above the second measurement distance value. This configuration with a delayed switch off may especially, but not exclusively, be useful in case the second measurement distance value is predetermined as a relatively short distance, especially if the distance is so short that it is conceivable that the user fairly often accidentally will during normal operation still, now and then for short periods of time, move the handheld Raman spectroscopy device away from the sample a distance being larger than the second measurement distance value MD2. The possibility to set a comparably low value of the second measurement distance value MD2 may be used to provide an increased security. The first predetermined switch-off-time period is preferably chosen such that a brief normal movement during normal operation of the handheld Raman spectroscopy device will be allowed, whereas a movement involving a turning of the handheld Raman spectroscopy device will typically take a time being larger than the first predetermined switch-off-time.

The light source may be switched off after a second predetermined switch-off-time period in response to the distance between the aperture and the sample being above an intermediate measurement distance value and may be switched off directly or after the first predetermined switch-off-time, preferably directly, in response to the distance between the aperture and the sample being above the second measurement distance value, the second measurement distance value being larger than the intermediate measurement distance value. With such a design it is made possible to have an intermediate measurement distance value which is comparably low and which triggers a switch off after a second predetermined switch-off-time period in combination with a security feature if the distance reaches the second measurement distance value. The intermediate measurement distance value and the second predetermined switch-off-time period may be used to switch off the light source if the aperture for a relatively long time period is fairly close and thereby not associated with any immediate hazard, but still not really close enough to perform a Raman spectroscopy.

In case there is a delay triggered by the second measurement distance value, it is preferred that the first predetermined switch-off-time period is shorter than the second predetermined switch-off time.

The handheld Raman spectroscopy device may be configured to, in response to the distance between the aperture and the sample being below an activation distance value, automatically activate the light source. This activation may be a direct activation. Alternatively, the activation may be with a delay for a predetermined activation time period. The activation distance value may be equal to the first measurement distance value. With such an automatic activation, the handheld Raman spectroscopy device becomes more user friendly. This may especially be useful for cases where the intended user is a user which does not operate a handheld Raman spectroscopy device especially often. It may also be especially useful in cases the handheld Raman spectroscopy device is operated by a user wearing a bulky protective suit.

The handheld Raman spectroscopy device may further be configured to, in response to the distance between the aperture and the sample being below the activation distance value, initiate the spectrometer to record a spectrum of light received through the aperture, the light including a Raman contribution of light scattered by the sample. This further facilitates use of the handheld Raman spectroscopy device.

The handheld Raman spectroscopy device may further be configured to automatically, in response to the distance between the aperture and the sample being below the activation distance value and in response to a spectrum of light being recorded, also analyse the recorded spectrum of light to determine the Raman contribution. This further facilitates use of the handheld Raman spectroscopy device. The handheld Raman spectroscopy device may further be configured to automatically, in response to the distance between the aperture and the sample being below the activation distance value and in response to a spectrum of light being recorded and in response to the recorded spectrum of light being analysed to determine the Raman contribution, to also match the Raman contribution with a database and thereby provide information about the substance of the sample. This further facilitates use of the handheld Raman spectroscopy device.

The handheld Raman spectroscopy device may further comprise a color sensor configured to detect spectral and/or intensity properties of light reflected from the sample in response to the distance sensor detecting that the distance between aperture and the sample is below a first color detection distance value, the handheld Raman spectroscopy device being configured to adjust the light exiting the housing through the aperture and thereby adjust spectral and/or intensity properties of light illuminating the sample in response to the spectral and/or intensity properties detected by the color sensor. The risk of that the high intensity light emitted from the light source damaging the sample or the surface on which the sample is present is thus reduced. Moreover, the accuracy of the measurement can be improved as the handheld Raman spectroscopy device takes spectral and/or intensity properties of the sample into account when operating the handheld Raman spectroscopy device. The safety of the device is also improved, as the light emitted from the light source and exiting the device through the aperture can be adapted such that for instance the thermal development of the sample is reduced.

According to one embodiment, the handheld Raman spectroscopy device is configured to adjust intensity properties of light illuminating the sample in response to the spectral and/or intensity properties detected by the colour sensor.

According to one embodiment, the handheld Raman spectroscopy device is configured to adjust spectral properties of the light illuminating the sample in response to the spectral and/or intensity properties detected by the colour sensor.

According to one embodiment, the handheld Raman spectroscopy device is configured to adjust the light exiting the housing through the aperture and thereby adjust both spectral and intensity properties of light illuminating the sample in response to the spectral and/or intensity properties detected by the colour sensor.

The spectrometer may be configured to adjust the analysis based on spectral and/or intensity properties of the sample detected by the color sensor. Consequently, the analysis and identification may be simplified if for instance the color of the sample is taken into account. As an example, the color of the sample could reduce the number of potentially relevant substances and thus the amount of data with which the sample needs to be compared with in the analysis can be reduced. Potentially relevant substances refer to substances which during the analysis are regarded as potential candidates of substances being the actual substance being analysed.

Further, having determined spectral and/or intensity properties of the sample allows this to be taken into account during analysis. For instance, a sample having a spectral property, such as a certain color, could have an effect on the received light making it difficult to determine the Raman contribution of the scattered light from the sample. Accordingly, the analysis could take such effects into account to further improve the analysis. It is for instance possible to disregard or suppress information pertaining to certain wavelengths being likely to affected by the spectral and/or intensity properties of the sample as determined by the color sensor. Moreover, it is possible to adjust the exposure time of the sample to the light in order to be able to determine weaker peaks in the Raman contribution from the sample to mitigate possible detrimental effects that the spectral and/or intensity properties of the sample could have on the analysis.

The handheld Raman spectroscopy device may be configured to prohibit activation of light source based on information from the color sensor, thus preventing that the light source illuminates a sample that may be sensitive to light emitted by the light source. The risk of damage occurring to the sample is thus reduced while the overall safety for the user of the handheld Raman spectroscopy device is improved. It may be noted that this information causing the activation of the light source being prohibited may be the result of an actual reading of the colour sensor, but that it may, but need not, also be the result of an inconclusive reading of the colour sensor.

The cap may further be configured to cover at least one of the distance sensor and a color sensor of the handheld Raman spectroscopy device.

In an aspect of the teachings herein is a method provided for operating a handheld Raman spectroscopy device. The handheld Raman spectroscopy device comprising a light source, a spectrometer, wherein the light source and the spectrometer are arranged in a housing. The housing is provided with an aperture allowing light from the light source to exit the housing through the aperture in a first direction for illuminating a sample and allowing scattered light from the sample to enter the housing through the aperture in a second direction, the second direction being opposite the first direction. The spectrometer is configured to analyse a Raman contribution of the scattered light. The handheld Raman spectroscopy device further comprises a removeable cap configured to selectively cover respectively expose the aperture, a cap removal sensor configured to detect whether the cap covers or exposes the aperture and a distance sensor facing along the first direction. The distance sensor is configured to measure a distance to the sample in order to determine a distance between the aperture and the sample. The method for operating the handheld Raman spectroscopy device comprises:
initiating operation of the light source in response to the cap removal sensor detecting that the aperture is exposed and the distance sensor detecting that the distance between the aperture and the sample is below a first measurement distance value, and
initiating the spectrometer to record a spectrum of light received through the aperture, the light including a Raman contribution of light scattered by the sample. Operation of the handheld Raman spectroscopy device is thus made more convenient and safer. The detection by means of the cap removal sensor facilitates initiation of the light source upon removal of the cap and thus exposure of the aperture. Further, the distance sensor prevents that the light source is activated when no sample or surface is present in the proximity of the device, i.e. closer than the first measurement distance.

The invention may also in short be said to relate to a handheld Raman spectroscopy device and to a method for operating a handheld Raman spectroscopy device comprising: a light source, a spectrometer, wherein the light source and the spectrometer are arranged in a housing, the housing being provided with an aperture allowing light from the light source to exit the housing through the aperture in a first direction for illuminating a sample and allowing scattered light from the sample to enter the housing through the aperture in a second direction, the second direction being opposite the first direction, wherein the spectrometer is configured to analyse a Raman contribution of the scattered light, the device further comprising:
a removeable cap configured to selectively cover respectively expose the aperture,a cap removal sensor configured to detect whether the cap covers or exposes the aperture.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figure 1 discloses an example of an optical setup of a handheld Raman spectroscopy device.
Figure 2 discloses a front view of a handheld Raman spectroscopy device.
Figure 3 discloses a side view of a handheld Raman spectroscopy device.
Figure 4 discloses a front view of a handheld Raman spectroscopy device.
Figure 5 discloses a schematic flowchart of a method of performing Raman spectroscopy.
Figure 6 discloses a side view of handheld Raman spectroscopy device.
Figure 7 discloses a schematic flowchart of a method of operating a handheld Raman spectroscopy device.
Figure 8 discloses a side view of handheld Raman spectroscopy device.
Figure 9 discloses a schematic flowchart of a method of operating a handheld Raman spectroscopy device.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

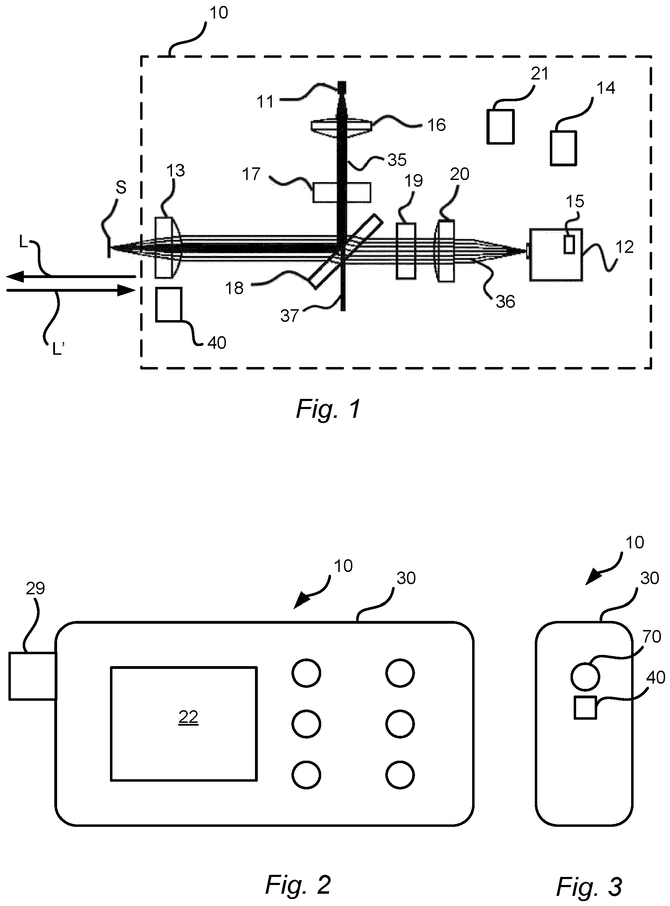

Fig 1 illustrates an example of an optical setup of a handheld Raman spectroscopy device 10. The handheld Raman spectroscopy device 10 is configured to illuminate a sample S with a focused electromagnetic beam, such as laser light, to produce an illuminated spot on the sample. The light at the illuminated spot of the sample S interacts with the sample S and is scattered by the sample S. The light scattered by the sample S includes, amongst others, a Raman contribution. This may also be referred to as that the light at the illuminated spot on the sample S is provided for excitation of the sample S, whereby light having a Raman component will be scattered by the sample S. The Raman component originates from an in-elastic scattering of the light illuminating the sample S. The physics behind Raman scattering is well-known for a person skilled in the art. Moreover, for sake of clarity, the disclosure will hereinafter typically refer only to the relevant fraction of the scattered light and it will typically be referred to as the Raman light or the scattered Raman light.

The handheld Raman spectroscopy device 10 comprises a light source 11, also referred to as an electromagnetic beam source, and optics configured to focus light from the light source 11 onto said illuminated spot on the sample S. The light source 11 is configured to provide a monochromatic light. The light source 11 is preferably a laser, such as a laser diode, emitting laser light. In the preferred embodiment, the monochromatic light has a wavelength of about 785 nm.

The light emitted by the light source 11 is collimated through a laser collimation lens 16 and then the laser light propagates through a laser clean up filter 17 and is redirected 90° by an interference filter 18 and out through an aperture 70 towards the sample S. The laser beam is focused onto a tiny spot on the sample S, typically smaller than 20µm in diameter, by a focusing lens 13. Then, the laser light interacts with the molecules of the sample S and is scattered by the sample S. The scattered light includes Raman light. The scattered Raman light is received through the aperture 70 and propagates through the focusing lens 13, the interference filter 18 and a long pass filter 19 and is focused on an entrance slit of a spectrometer 12 by an in-coupling lens (not shown).

The sample S is arranged close to the focusing lens 13 of the system 10. The focusing lens 13 may form an outer surface of the aperture 70 or there may be provided a separate aperture 70 outside the focusing lens. In any case, the sample S is arranged close to the aperture 70, such as within a few millimetres. Typically, the sample S is a distance within 0-50mm, more preferably within 0-10mm, from the window and from the focusing lens 13. In a preferred embodiment, the focusing lens 13 forms the outer surface of the aperture 70. In a preferred embodiment the focusing lens 13 is a so-called liquid lens.

The spectrometer 15 comprises a sensor 15. The sensor 15 comprises an array of sensor elements having different sensitivity to light of different wavelengths and the sensor 15 is thereby capable of recording information concerning different intensities of light at different wavelengths. That is, the sensor 15 is capable of recording a spectrum of light received through the aperture 70, the light including a Raman contribution of light scattered by the sample.

The handheld Raman spectroscopy device 10 comprises a housing 30 housing amongst others the light source 11, the spectrometer 15 and a control unit 14.

As mentioned above, the housing 30 is provided with an aperture 70 allowing light from the light source 11 to exit the housing 30 through the aperture 70 in a first direction L for illuminating the sample S and allowing scattered light from the sample S to enter the housing 30 through the aperture 70 in a second direction L', the second direction L' being opposite the first direction L.

The handheld Raman spectroscopy device 10 further comprises at least one distance sensor 40. The distance sensor 40 is arranged in or on the housing 30 and faces along the first direction L. The distance sensor 40 is configured to measure a distance to the sample S. By determining a distance between the distance sensor 40 and the sample S and by knowing the position of the distance sensor 40 relative to the aperture 70 it is possible to determine a distance between the aperture 70 and the sample S.

In Figure 2 and 3, the handheld Raman spectroscopy device 10 is shown in a side view and in a front view respectively. The handheld Raman spectroscopy device 10 is shown in Figure 2 being provided with a removeable cap 29 covering the aperture 70. The cap 29 forming a protective cover for the aperture 70 as well as a safety measure in case of unintended activation of the light source 11.

In Figure 3, the handheld Raman spectroscopy device 10 is shown with the cap 29 removed. The cap 29 may however be configured to cover both the aperture 70 as well as the distance sensor 40.

It is further illustrated how the distance sensor 40 may be arranged near the aperture 40. It further envisioned that the distance sensor 40 could be arranged in the aperture 70. Having a small distance between the distance sensor 40 and the aperture 70 could be beneficial in terms of achieving a high reliability in the measurements without having to compensate to great extent for a possibly different aspect angle to sample S from the distance sensor 40 and the aperture 70 respectively.

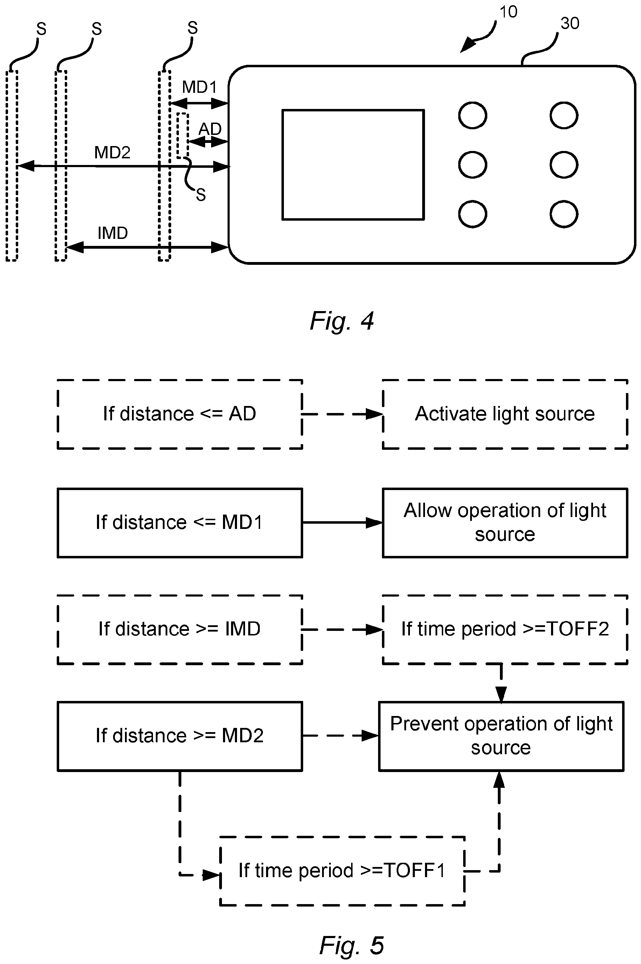

As is illustrated in Figure 4 and 5, the control unit 14 of the handheld Raman spectroscopy device 10 is configured to allow operation of the light source 11 when the distance between the aperture 70 and the sample S is below an first measurement distance value MD1 and to prevent operation of the light source 11 when the distance between the aperture 70 and the sample S is above a second measurement distance value MD2.

In one preferred embodiment, the second measurement distance value MD2 is equal to the first measurement distance value MD1. In one preferred embodiment, the second measurement distance value MD2 is larger than the first measurement distance value MD1.

The first measurement distance value MD1 is preferably within 10-30mm. The second measurement distance value MD2 is preferably within 10-30mm, while also taking into account the above mentioned relation to the first measurement distance value MD1. In certain applications, it may be desired to increase the first and/or the second measurement distance MD1, MD2 value up to approximately 50 mm. Additionally, in certain applications, it may be desired to decrease the first and/or the second measurement distance MD1, MD2 value to or close to 0 mm. It may be noted that the second measurement distance value MD2 may in accordance with one embodiment be chosen such that if the sample S is a planar surface, parts of the handheld Raman spectroscopy device 10 will, when the handheld Raman spectroscopy device10 is angled relative to the planar surface, hit the planar surface before the light beam from the aperture 70 can reach an angle where it is parallel to the planar surface. It may be noted that a distance sensor 40 typically is capable of detecting a distance to something not only along a straight line but it will typically determine the shortest distance to anything being present within a certain solid angle. At a minimum it is preferred that the distance sensor 40 will detect a distance being larger than the second measurement distance value MD2 before it is possible to have the handheld Raman spectroscopy device 10 being oriented backwards.

In one preferred embodiment, the light source 11 is switched off directly in response to the distance between the aperture 70 and the sample S being above the second measurement distance value MD2.

In one preferred embodiment, the light source 11 is switched off after a first predetermined switch-off-time period TOFF1 in response to the distance between the aperture 70 and the sample S being above the second measurement distance value MD2.

The first predetermined switch-off-time period TOFF1 is preferably within 200-800ms, preferably about 500ms.

In one preferred embodiment, the light source 11 is switched off after a second predetermined switch-off-time period TOFF2 in response to the distance between the aperture 70 and the sample S being above an intermediate measurement distance value IMD and being switched off directly or after the first predetermined switch-off-time period TOFF1, preferably directly, in response to the distance between the aperture 70 and the sample S being above the second measurement distance value MD2, the second measurement distance value MD2 being larger than the intermediate measurement distance value IMD. In case there is a delay triggered by the second measurement distance value MD2, it is preferred that the first predetermined switch-off-time period TOFF1 is shorter than the second predetermined switch-off time period TOFF2. It may be noted that if the aperture 70 is close to the sample S and the handheld Raman spectroscopy device 10 is moved such that the distance between the aperture 70 and the sample S increases, the intermediate measurement distance value IMD will be reached first and thereby a timer associated with the second predetermined switch-off-time period TOFF2 will commence first and when the second measurement distance value MD2 is reached at a later stage, thereby a timer associated with the first predetermined switch-off-time period TOFF1 will be initiated later. Thus, the use of "first" and "second" in the phrases first and second switch-off-times are intended to be read as labels and not as an indication of a certain order in time.

The handheld Raman spectroscopy device 10 may be configured to, in response to the distance between the aperture and the sample being below an activation distance value AD, automatically activate the light source 11. This activation may be a direct activation. Alternatively, the activation may be with a delay for a predetermined activation time period AT. The activation distance value AD may be equal to the first measurement distance value MD1.

The handheld Raman spectroscopy device 10 may further be configured to, in response to the distance between the aperture 70 and the sample S being below the activation distance value AD, initiate the spectrometer 15 to record a spectrum of light received through the aperture 70, the light including a Raman contribution of light scattered by the sample S.

The handheld Raman spectroscopy device 10 may further be configured to automatically, in response to the distance between the aperture 70 and the sample S being below the activation distance value AD and in response to a spectrum of light being recorded, also analyse the recorded spectrum of light to determine the Raman contribution. The handheld Raman spectroscopy device 10 may further be configured to automatically, in response to the distance between the aperture 70 and the sample S being below the activation distance value AD and in response to a spectrum of light being recorded and in response to the recorded spectrum of light being analysed to determine the Raman contribution, to also match the Raman contribution with a database 21 and thereby provide information about the substance of the sample S. The information may be displayed on a display 22 of the handheld Raman spectroscopy device 10. The database 21 is preferably provided in a memory 21 of the handheld Raman spectroscopy device 10, but may also be provided on a remote server for instance a cloud server to which the handheld Raman spectroscopy device 10 may be connected for instance by means wired or wireless connection.

In this context it may also be noted that in the description, there is disclosed a plurality of different control parameters, such as first, second, and intermediate measurement distance values, first and second predetermined switch-off-times, etc. which all may be set within different ranges according to certain inter-related requirements and which preferably are set within the preferred ranges, the handheld Raman spectroscopy device 10 does not necessarily need to incorporate all these parameters. It may also be noted that the actual use of the handheld Raman spectroscopy device 10 may result in that only some of the parameters comes into play. As an example, if the handheld Raman spectroscopy device 10 involves the use of both an intermediate and a second measurement distance value IMD, MD2, the actual use may be such that the handheld Raman spectroscopy device 10 is moved such that the second measurement distance value MD2, e.g. associated with a direct switch-off, will trigger the switch-off before the second predetermined switch-off-time period TOFF2 has been reached.

It may also be noted that the sensors and parameters may also be used for other purposes not explicitly stated herein. For example, the distance sensor 40 may e.g. be used to provide a trigger to the control unit 14 to communicate to the user, such as by a vibration, sound signal and/or light signal, that the handheld Raman spectroscopy device 10 has within a specific time-out time period never reached any of the above discussed distance values, such as the activation distance value AD or any of the first and/or second measurement distance values MD1, MD2.

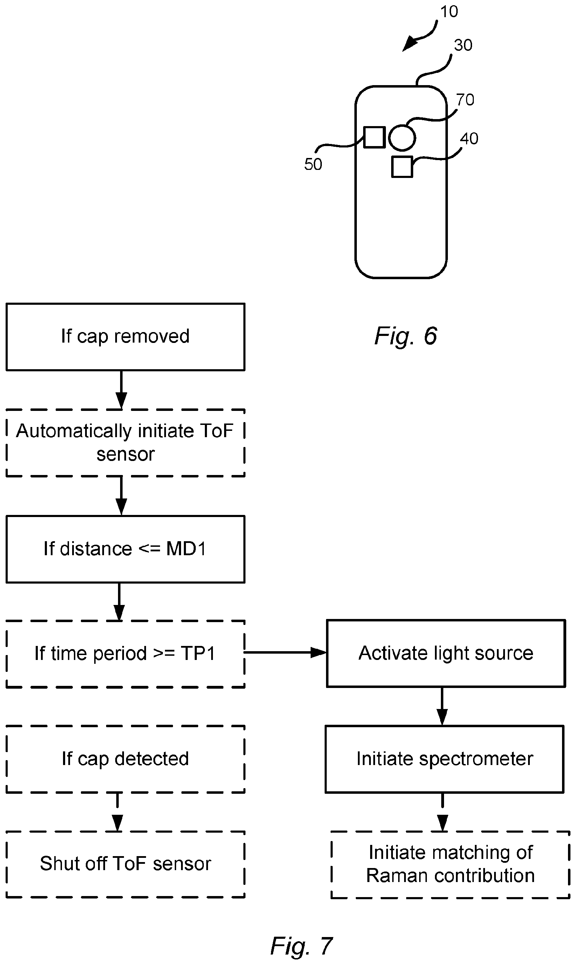

In Figure 6 a front view shown of an embodiment of the handheld Raman spectroscopy device 10. Furthermore, Figure 7 shows a schematic flowchart of a method for operating the handheld Raman spectroscopy device 10. In the embodiment shown in Figure 6, a cap removal sensor 50 is provided. The cap removal sensor 50 is configured to detect whether the cap 29 (shown in Figure 2) covers or exposes the aperture 70. In the embodiment of Figure 6, the handheld Raman spectroscopy device 10 is configured to initiate operation of the light source 11 in response to the cap removal sensor 50 detecting that the aperture 70 is exposed and the distance sensor 40 detecting that the distance between the aperture 70 and the sample S is below the first measurement distance value MD1, and to initiate the spectrometer 15 to record a spectrum of light received through the aperture 70, the light including a Raman contribution of light scattered by the sample S.

The first measurement distance value MD1 is preferably as mentioned in the foregoing in the interval 10mm to 30mm.

The cap removal sensor 50 may be configured to detect removal of the cap 29 by means of one or several of inductive sensing, capacitive sensing and/or magnetic sensing. Further, the cap removal sensor 50 may be a proximity sensor such as an IR sensor. Preferably, the cap removal sensor 50 is an magnetic sensor such as a hall sensor. Preferably, the cap removal sensor 50 is arranged associated with the housing 30 of the handheld Raman spectroscopy device 10. The cap removal sensor 50 may be arranged in a position in the housing 30 of the handheld Raman spectroscopy device where the risk of the coming into contact with the sample S is reduced. For instance, the cap removal sensor 50 may be arranged inside the housing 30 near the aperture 70 such that it can detect the removal of the cap 29 through the housing 30.

Preferably, the distance sensor 50 is configured to be initiated automatically by the control unit 14 of the handheld Raman spectroscopy device 10 as the cap removal sensor 50 detects that the cap 29 has been removed. However, it is also conceivable that the distance sensor 50 may be configured to be manually activated for instance by means of a user interface of the handheld Raman spectroscopy device 10.

The distance sensor 40 could further be configured to automatically shut off when the cap removal sensor 50 detects the presence of the cap 29. Alternatively, the distance sensor 40 could be used as the cap removal sensor 50 and be activated by a user setting the handheld Raman spectroscopy device 10 into a power-on mode.

Moreover, as is illustrated in embodiments of Figures 4 and 5 which are also applicable to the embodiments of Figures 6 and 7, the handheld Raman spectroscopy device 10 may be configured to allow operation of the light source 11 when the distance between aperture 70 and the sample S is below the first measurement distance MD1 value and to prevent operation of the light source 11 when the distance between aperture 70 and the sample S is above a second measurement distance MD2 value. The second measurement distance value MD2 being equal to or larger than the first measurement distance value MD1.

Additionally, as described in the foregoing, the handheld Raman spectroscopy device 10 may in response to the cap removal sensor 50 detecting that the aperture 70 is exposed and to that the spectrometer 15 records a spectrum of light received through the aperture 70 be configured to initiate matching of the Raman contribution of light scattered by the sample S against known Raman contributions in a database 21. A substance of the sample S could thus be determined by comparing the Raman contribution thereof with the know Raman response of substances in the database 21.

Moreover, as is illustrated in Figure 7, the handheld Raman spectroscopy device 10 could be configured activate the light source 11 once the foregoing conditions are fulfilled with the addition of the passing of a predetermined time period TP1 from the determining of that the distance is above the first measurement distance MD1. The time period TP1 may be between 200ms and 1000ms, preferably approximately 500ms. The time period TP1 provides a delay that could be useful as a safety measure to prevent the light source 11 from causing harm to a user of the handheld Raman spectroscopy device 10. A user interface of the handheld Raman spectroscopy device 10, such as a sound signal or visual indicator, could be configured to be activated before the time period TP1 has passed such to alert a user of that activation of the light source 11 is imminent.

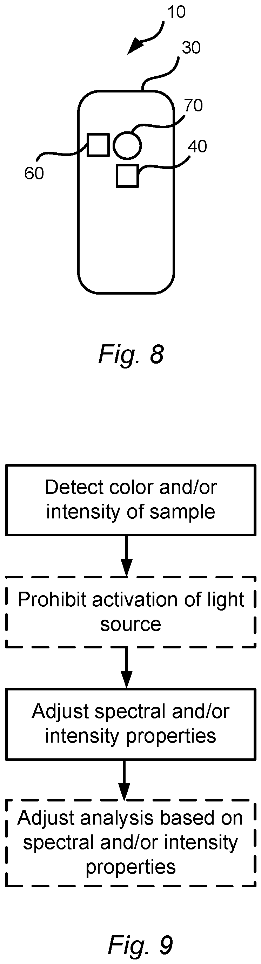

In Figure 8 is a front view shown of an embodiment of the handheld Raman spectroscopy device 10. Furthermore, Figure 9 shows a schematic flowchart of a method for operating the handheld Raman spectroscopy device 10. The embodiments shown in Figures 8 and 9 are applicable to each of the embodiments described herein unless explicitly stated otherwise.

As shown in Figure 8, it is shown how the handheld Raman spectroscopy device 10 is provided with a color sensor 60 configured to detect spectral and/or intensity properties of light reflected from the sample S in response to the distance sensor 40 detecting that the distance between aperture 70 and the sample S is below a first color detection distance value CD1. The handheld Raman spectroscopy device is configured to adjust the light exiting the housing through the aperture and thereby adjust spectral and/or intensity properties of light illuminating the sample in response to the spectral and/or intensity properties detected by the color sensor. The color sensor 60 may be a photoelectric sensor, preferably a multispectral sensor capable of detecting at least the color and brightness/intensity of the sample S. The color sensor 60 may be embodied as a digital camera.

Adjusting the light exiting the housing 30 by means of the color sensor allows the measurement to be improved. For instance, a certain color of the sample S may beneficial to analyse with a light source 11 having a certain wavelength. Additionally, a dark sample S could exhibit rapid thermal development upon being illuminated with the light from the light source 11. The handheld Raman spectroscopy device 10 could thus be adapted to reduce the intensity of the light source 11 accordingly, by reducing the intensity of the light exiting the device 10.

In order to adapt the spectral property of the light source 11, the handheld Raman spectroscopy device may be provided with a tuneable light source 11 allowing adaptation of the wavelength of the emitted light. Further still, the light source 11 may be provided with several individual light sources 11 each having a different wavelength that can be activated separate of one another.

The intensity property of the light source 11 may be adapted by altering the power output of the light source 11. Moreover, the intensity of the light exiting the device 10 may be altered by controlling the focusing lens 13 of the raman Spectroscopy device 10. The focusing lens 13 may be a liquid lens allowing the focal length thereof to be altered by applying and varying a voltage of the liquid lens 13. In case the sample S is detected by the color sensor S to have an intensity property that requires that a low light intensity is used, the focusing lens 13 could be adapted such that the focal length is such beyond or before the sample S. This reduces the intensity of the light per unit surface area of the sample S, thus reducing the risk of exerting the sample S to a too high temperature and thus damage caused by the thermal development.

Alternatively, or in addition, the handheld Raman spectroscopy device 10 may be provided with an adjustable aperture 70. The adjustable aperture 40 may thus be configured to adjust the size of the aperture 70 in response the intensity information provided by the color sensor 60. For example, if the color sensor 60 detects the sample S having intensity properties requiring a low light intensity for illuminating the sample S, the adjustable aperture 70 is configured to reduce the size of the aperture 70 and thus reducing the amount of light exiting the handheld Raman spectroscopy device 10. The adjustable aperture 70 may be an iris aperture 70.

Additionally, the handheld Raman spectroscopy device 10 may be configured to control the spectrometer 15 such that the analysis is based on spectral and/or intensity properties of the sample S detected by the color sensor 60.

The handheld Raman spectroscopy device 10 may further be configured to prohibit start of the light source 11 based on information from the color sensor 60. Such information could include a non-response from the color sensor 60, for instance if the color sensor 60 is not able to detect color and/or intensity information of the sample S. In such a situation, the handheld Raman spectroscopy device 10 could prevent activation of the light source 11 to avoid illuminating the sample S with light that could cause damage to the sample S and danger to the user of the device 10. Additionally, the handheld Raman spectroscopy device 10 could be configured to provide an indication to the user by means of a user interface of the device 10, indicating the information from the color sensor 60. The color sensor 60 could further detect that color and/or intensity information of the sample S is not compatible with operation of the device 10 and thus prevent activation of the light source 11.

The color sensor 60 may further comprise a low intensity light being configured to illuminate the sample S during detection of color and/or intensity of the sample S. The low intensity light illuminates the sample S with harmless light that facilitates the color sensor 60 to provide reliable detection regardless of the quality of the ambient lighting.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain features are recited in mutually different dependent claims does not indicate that a combination of these features cannot be used to advantage.

It is contemplated that there are numerous modifications of the embodiments described herein, which are still within the scope of the invention as defined by the appended claims.

## Claims

1. A handheld Raman spectroscopy device (10) comprising:
a light source (11),
a spectrometer (15),
wherein the light source (11) and the spectrometer (15) are arranged in a housing (30), the housing (30) being provided with an aperture (70) allowing light (35) from the light source (11) to exit the housing (30) through the aperture (70) in a first direction (L) for illuminating a sample (S) and allowing scattered light from the sample (S) to enter the housing (30) through the aperture (70) in a second direction (L'), the second direction being opposite the first direction (L), wherein the spectrometer (15) is configured to analyse a Raman contribution of the scattered light, the device further comprising:
a removeable cap (29) configured to selectively cover respectively expose the aperture (70),
a cap removal sensor (50) configured to detect whether the cap (29) covers or exposes the aperture (70), and
a distance sensor (40) facing along the first direction (L), the distance sensor (40) being configured to measure a distance to the sample (S) in order to determine a distance between the aperture (70) and the sample (S), wherein the handheld Raman spectroscopy device (10) is configured to initiate operation of the light source (11) in response to: the cap removal sensor (50) detecting that the aperture (70) is exposed and the distance sensor (40) detecting that the distance between the aperture (70) and the sample (S) is below a first measurement distance value (MD1), and to initiate the spectrometer (15) to record a spectrum of light received through the aperture (70), the light including a Raman contribution of light scattered by the sample (S).

2. The handheld Raman spectroscopy device (10) according to claim 1, wherein the cap removal sensor (50) is associated with the housing (30) of the handheld Raman spectroscopy device (10).

3. The handheld Raman spectroscopy device (10) according to claim 1 or 2, wherein the distance sensor (40) is configured to automatically shut off when the cap (29) is placed over the aperture (70).

4. The handheld Raman spectroscopy device (10) according to any one of the preceding claims, wherein the cap removal sensor (50) is configured to detect the removal of the cap (29) based on at least one selected from the group consisting of: inductive sensing, capacitive sensing and/or magnetic sensing.

5. The handheld Raman spectroscopy device (10) according to any one of the preceding claims, wherein the distance sensor (40) is configured to automatically initiate in response to the cap removal sensor (50) detecting that the cap (29) is removed to expose the aperture (70).

6. The handheld Raman spectroscopy device (10) according to any one of the preceding claims, wherein the handheld Raman spectroscopy device (10) in response to the cap removal sensor (50) detecting that the aperture (70) is exposed and to that the spectrometer (15) records a spectrum of light received through the aperture (70) is configured to initiate matching of the Raman contribution of light scattered by the sample (S) against known Raman contributions in a database.

7. The handheld Raman spectroscopy device (10) according to any one of the preceding claims, wherein the handheld Raman spectroscopy device (10) is configured to allow operation of the light source (11) when the distance between aperture (70) and the sample (S) is below the first measurement distance value (MD1) and to prevent operation of the light source (11) when the distance between aperture (70) and the sample (S) is above a second measurement distance value (MD2), the second measurement distance value (MD2) being equal to or larger than the first measurement distance value (MD1).

8. The handheld Raman spectroscopy device (10) according to claim 7, wherein the second measurement distance value (MD2) is equal to or larger than the first measurement distance value (MD1).

9. The handheld Raman spectroscopy device (10) according to claim 7 or 8, wherein the light source (11) is switched off directly in response to the distance between the aperture (70) and the sample (S) being above the second measurement distance value (MD2).

10. The handheld Raman spectroscopy device (10) according to any one of claims 7 to 9, wherein the light source (11) is switched off after a first predetermined switch-off-time period (TOFF1) in response to the distance between the aperture (70) and the sample (S) being above the second measurement distance value (MD2).

11. The handheld Raman spectroscopy device (10) according to any one of the preceding claims, further comprising a color sensor (60) configured to detect spectral and/or intensity properties of light reflected from the sample (S) in response to the distance sensor (40) detecting that the distance between aperture (70) and the sample (S) is below a first color detection distance value,
wherein the handheld Raman spectroscopy device (10) is configured to adjust the light exiting the housing (30) through the aperture (70) and thereby adjust spectral and/or intensity properties of light illuminating the sample (S) in response to the spectral and/or intensity properties detected by the color sensor (60).

12. The handheld Raman spectroscopy device (10) according to claim 11, wherein the spectrometer (12) is configured to adjust the analysis based on spectral and/or intensity properties of the sample (S) detected by the colour sensor (60).

13. The handheld Raman spectroscopy device (10) according to claim 11 or 12, wherein the handheld Raman spectroscopy device (10) is configured to prohibit activation of light source (11) based on information from the colour sensor (60).

14. The handheld Raman spectroscopy device (10) according to any one of the preceding claims, wherein the cap (29) is configured to cover at least one of the distance sensor (40) and a color sensor (60) of the handheld Raman spectroscopy device (10).

15. A method for operating a handheld Raman spectroscopy device (10), the handheld Raman spectroscopy device (10) comprising:
a light source (11),
a spectrometer (15),
wherein the light source (11) and the spectrometer (15) are arranged in a housing (30), the housing (30) being provided with an aperture (70) allowing light from the light source (11) to exit the housing (30) through the aperture (70) in a first direction (L) for illuminating a sample (S) and allowing scattered light from the sample (S) to enter the housing (30) through the aperture (70) in a second direction (L'), the second direction (L') being opposite the first direction (L), wherein the spectrometer (15) is configured to analyse a Raman contribution of the scattered light, the device further comprising:
a removeable cap (29) configured to selectively cover respectively expose the aperture (70),
a cap removal sensor (50) configured to detect whether the cap (29) covers or exposes the aperture (70), and
a distance sensor (40) facing along the first direction (L), the distance sensor (40) being configured to measure a distance to the sample (S) in order to determine a distance between the aperture (70) and the sample (S), wherein the method for operating the handheld Raman spectroscopy device (10) comprises:
initiating operation of the light source (11) in response to: the cap removal sensor (50) detecting that the aperture (70) is exposed and the distance sensor (40) detecting that the distance between the aperture (70) and the sample (S) is below a first measurement distance value (MD1), and
initiating the spectrometer (15) to record a spectrum of light received through the aperture (70), the light including a Raman contribution of light scattered by the sample (S).
